# EUROPEAN PATENT APPLICATION

(11) **EP 4 848 433 A1**
(43) Date of publication of application: **02.12.2026**
(21) Application number: 24921643.3
(22) Date of filing: 19.11.2024
(51) Int. Cl.: H01M 50/244

(54) **BATTERY AND ELECTRICAL DEVICE**

(30) Priority: 30.01.2024 CN 202420227124 U
(71) Applicant: Contemporary Amperex Technology Co., Limited, Ningde, Fujian 352100 (CN)
(72) Inventor: WANG, Lei, Ningde, Fujian 352100 (CN); DAI, Yunlong, Ningde, Fujian 352100 (CN); ZHANG, Kaiwen, Ningde, Fujian 352100 (CN); LIN, Jiubiao, Ningde, Fujian 352100 (CN); ZHOU, Linggang, Ningde, Fujian 352100 (CN)
(74) Representative: Gong, Jinping
(86) International application number: PCT/CN2024/133029
(87) International publication number: WO 2025/161621

(57) **Abstract**

This application discloses a battery and an electrical device. The battery includes a battery cell group and a first case. The first case includes a bottom wall and two first side walls oppositely arranged along a first direction. The battery cell group is located between the two first side walls. The bottom wall is used for carrying the battery cell group, and each of the first side walls is connected to the bottom wall via a first connection portion. The first side wall has a first side surface facing the battery cell group. Along the first direction, a minimum distance between the first side surface and the battery cell group is L₁, and a minimum distance between the first connection portion and the battery cell group is L₂, satisfying L₁ ≤ L₂, which can effectively improve the reliability of the battery.

## Description

### CROSS-REFERENCE TO RELATED APPLICATIONS

This application claims priority to Chinese patent application 202420227124.2, filed on January 30, 2024 and entitled "BATTERY AND ELECTRICAL DEVICE", which is incorporated herein by reference in its entirety.

### TECHNICAL FIELD

This application relates to the field of battery technologies, and in particular, to a battery and an electrical device.

### BACKGROUND

With the advancement of new energy technologies, batteries have found increasingly widespread application. Featuring high energy density, high reliability, long service life, and environmental friendliness, batteries are now extensively used in passenger vehicles, commercial vehicles, electric bicycles, heavy trucks, energy storage facilities, swapping stations, engineering manufacturing, intelligent devices, and the like, while also promoting technological development and research in communication terminals, medical devices, energy development, and other aspects.

In battery technology, how to improve the reliability of batteries is an urgent technical problem to be solved.

### SUMMARY

Embodiments of this application provide a battery and an electrical device, so as to effectively improve the reliability of the battery.

According to a first aspect, an embodiment of this application provides a battery, where the battery includes a battery cell group and a first case. The first case includes a bottom wall and two first side walls oppositely arranged along a first direction, where the battery cell group is located between the two first side walls, the bottom wall is used for carrying the battery cell group, and each of the first side walls is connected to the bottom wall via a first connection portion. The first side wall has a first side surface facing the battery cell group, along the first direction, a minimum distance between the first side surface and the battery cell group is L₁, and a minimum distance between the first connection portion and the battery cell group is L₂, satisfying L₁ ≤ L₂.

In the above technical solution, the minimum distance between the first connection portion and the battery cell group is greater than or equal to the minimum distance between the first side surface and the battery cell group, thus increasing the distance between the first connection portion and the battery cell group. In this way, when the minimum distance between the first side surface and the battery cell group is defined as a safe electrical distance, the minimum distance between the first connection portion and the battery cell group can be greater than or equal to the safe electrical distance. This mitigates the risk of electrical breakdown between the first connection portion and the battery cell group, lowers the risk of short circuit between the first case and the battery cell group, and enhances the reliability of the battery.

In some embodiments, 4 mm ≤ L₁ ≤ 50 mm.

In the above technical solution, L₁ is greater than or equal to 4 mm so as to ensure a safe electrical distance between the first side surface and the battery cell group and thus enhance the reliability of the battery. With the size of the first case fixed, L₁ is less than or equal to 50 mm, which can reduce the distance between the battery cell group and the first side surface, so that the space accommodating the battery cell group is larger, thereby accommodating a battery cell group with a larger volume, increasing the proportion of the battery cell group per unit volume, and improving the energy density of the battery. Therefore, 4 mm ≤ L₁ ≤ 50 mm can balance the reliability and energy density of the battery.

In some embodiments, 6 mm ≤ L₁ ≤ 40 mm.

In the above technical solution, L₁ is greater than or equal to 6 mm, which can further enhance the reliability of the electrical distance between the first side surface and the battery cell group, thereby boosting the reliability of the battery. L₁ is less than or equal to 40 mm, which can further reduce the distance between the first side surface and the battery cell group, further decrease the volume of the battery case, and increase the energy density of the battery. Therefore, 6 mm ≤ L₁ ≤ 40 mm can further balance the reliability and energy density of the battery.

In some embodiments, the bottom wall has a first surface facing the battery cell, and the first side surface is perpendicular to the first surface.

In the above technical solution, the first side surface is perpendicular to the first surface, which helps improve the consistency of the distance between the first side surface and the battery cell group.

In some embodiments, the first side wall and the bottom wall are formed separately.

In the above technical solution, compared with the technical solution in which the first side wall and the bottom wall are integrally formed, after the first side wall and the bottom wall are formed separately, the first side wall and the bottom wall are jointed via the first connection portion. In this way, the position of the first connection portion is not constrained by the forming process of the first case, thereby facilitating the arrangement of the first connection portion at a position away from the battery cell group. This mitigates the risk of short circuit between the first connection portion and the battery cell group, and is conducive to enhancing the reliability of the battery while lowering the manufacturing difficulty of the first case.

In some embodiments, the first side wall and the bottom wall are welded to form a first welding portion, and the first connection portion is the first welding portion.

In the above technical solution, the first side wall and the bottom wall are joined by welding. This welding process enhances the joint strength between the first side wall and the bottom wall, thereby boosting the overall structural strength of the first case.

In some embodiments, the first side wall is a first beam formed by roll forming of a plate member.

In the above technical solution, the first side wall is a first beam formed by roll forming of a plate member. This roll forming process yields a first side wall with enhanced structural strength, further enhancing the overall structural strength of the first case and boosting the reliability of the battery. It also facilitates the fabrication and forming the first side wall, thereby lowering the manufacturing difficulty of the first side wall.

In some embodiments, the first beam includes a first wall portion, a second wall portion, a third wall portion, and a fourth wall portion connected end to end in sequence, where the first wall portion, the second wall portion, the third wall portion and the fourth wall portion enclose to form a cavity; and the first wall portion and the third wall portion are oppositely arranged along the first direction, the second wall portion and the fourth wall portion are oppositely arranged along a second direction, one side of the first wall portion facing the battery cell group is the first side surface, and the second direction is perpendicular to the first direction.

In the above technical solution, the first wall portion, the second wall portion, the third wall portion, and the fourth wall portion are connected end to end in sequence to form the first beam. The first wall portion, the second wall portion, the third wall portion, and the fourth wall portion enclose to form a cavity, where the cavity reduces the mass of the first beam, lowers the proportion of the first case per unit mass, increases the proportion of the battery cell group per unit mass, and can enhance the energy density of the battery.

In some embodiments, a leading end and a trailing end of the plate member are connected.

In the above technical solution, the leading end and the trailing end of the plate member are joined together, which can enhance the structural strength of the first beam, and boost the structural strength of the first case, thereby improving the reliability of the battery.

In some embodiments, a leading end and a trailing end of the plate member are welded to form a second welding portion.

In the above technical solution, jointing the leading end and the trailing end of the plate member by welding is conducive to enhancing the structural strength of the first beam and boosting the overall structural strength of the first case.

In some embodiments, the first beam is provided with a mounting portion.

In the above technical solution, the mounting portion facilitates installing or fixing the battery to a desired position.

In some embodiments, the battery further includes a second case, where the second case and the first case jointly define an accommodation space for accommodating the battery cell group, and the second case is connected to the first beam.

In the above technical solution, the second case and the first case jointly define an accommodation space for accommodating the battery cell group, the second case and the first case separate or isolate the accommodation space from the external environment, and the second case and the first case create a relatively stable internal environment for the battery cell group. This mitigates the impact of substances in the external environment on the battery cell group, and thus enhances the reliability of the battery.

In some embodiments, the first case further includes two second side walls oppositely arranged along a third direction, where the battery cell group is located between the two second side walls, and each of the second side walls is connected to the bottom wall via a second connection portion; and the second side wall has a second side surface facing the battery cell group, along the first direction, a minimum distance between the second side surface and the battery cell group is L₃, a minimum distance between the second connection portion and the battery cell group is L₄, satisfying L₃ ≤ L₄, and the third direction is perpendicular to the first direction.

In the above technical solution, the minimum distance between the second connection portion and the battery cell group is greater than or equal to the minimum distance between the second side surface and the battery cell group, thus increasing the distance between the second connection portion and the battery cell group. In this way, when the minimum distance between the second side surface and the battery cell group is defined as a safe electrical distance, the minimum distance between the second connection portion and the battery cell group can be greater than or equal to the safe electrical distance. This mitigates the risk of electrical breakdown between the second connection portion and the battery cell group, further lowers the risk of short circuit between the first case and the battery cell group, and thus enhances the reliability of the battery.

In some embodiments, the second side wall is a second beam formed by roll forming of a plate member.

In the above technical solution, the second side wall is a second beam formed by roll forming of a plate member. This roll forming process yields a second side wall with enhanced structural strength, further enhancing the overall structural strength of the first case and boosting the reliability of the battery. It also facilitates the fabrication and forming the second side wall, thereby lowering the manufacturing difficulty of the second side wall.

According to a second aspect, an embodiment of this application provides an electrical device, where the electrical device includes the battery provided in any of the above embodiments, and the battery is configured to supply power to the electrical device.

### DESCRIPTION OF DRAWINGS

In order to more clearly illustrate the technical solutions of the embodiments of this application, the accompanying drawings required in the embodiments will be briefly introduced below. It should be understood that the following drawings only show some embodiments of this application and therefore should not be regarded as limiting the scope. For those of ordinary skill in the art, other related drawings can be obtained based on these drawings without creative efforts.
FIG. 1 is a schematic structural diagram of a vehicle according to some embodiments of this application;
FIG. 2 is a schematic structural diagram of a battery according to some embodiments of this application;
FIG. 3 is a schematic exploded view of a battery according to some embodiments of this application;
FIG. 4 is a cross-sectional view of a battery according to some embodiments of this application;
FIG. 5 is an enlarged view of part A in FIG. 4;
FIG. 6 is a cross-sectional view of a battery according to some other embodiments of this application;
FIG. 7 is an enlarged view of part B in FIG. 6;
FIG. 8 is a schematic diagram of some other embodiments of a first side wall in FIG. 7;
FIG. 9 is a schematic structural diagram of a first beam according to some embodiments of this application;
FIG. 10 is a schematic structural diagram of a first beam according to some other embodiments of this application;
FIG. 11 is a schematic structural diagram of an insulating member provided on a first side surface according to some embodiments of this application;
FIG. 12 is a schematic structural diagram of some other embodiments of a first beam and a bottom wall in FIG. 5;
FIG. 13 is a cross-sectional view of a battery 100 along another perspective according to some other embodiments of this application; and
FIG. 14 is an enlarged view of part C in FIG. 13.

Reference signs: 100: battery; 10: battery cell group; 11: battery cell; 20: case; 21: first case; 211: bottom wall; 2111: first surface; 2112: protruding portion; 212: first side wall; 212a: first beam; 2121: first wall portion; 21211: first side surface; 2122: second wall portion; 2123: third wall portion; 2124: fourth wall portion; 21241: recessed portion; 2125: joint seam; 2126: second welding portion; 2127: mounting portion; 213: second side wall; 213a: second beam; 2131: second side surface; 214: first connection portion; 215: second connection portion; 22: second case; 23: insulating member; 24: locking member; 1000: vehicle; 200: motor; 300: controller; Y: first direction; Z: second direction; X: third direction.

The accompanying drawings are not drawn to actual scale.

### DETAILED DESCRIPTION

In order to make the objectives, technical solutions and advantages of the embodiments of this application clearer, the technical solutions in the embodiments of this application will be clearly described below in conjunction with the accompanying drawings in the embodiments of this application. Obviously, the described embodiments are part of the embodiments of this application, not all of them. Based on the embodiments in this application, all other embodiments obtained by those of ordinary skill in the art without creative efforts fall within the protection scope of this application.

Unless otherwise defined, all technical and scientific terms used in this application have the same meaning as commonly understood by those skilled in the technical field to which this application belongs; the terms used in the specification of this application are only for the purpose of describing specific embodiments and are not intended to limit this application; the terms "including" and "having" and any variations thereof in the specification, claims and the above description of accompanying drawings of this application are intended to cover non-exclusive inclusion. The terms "first", "second", and the like in the specification and claims of this application or the above drawings are used to distinguish different objects, rather than to describe a specific order or primary-secondary relationship.

Reference to "embodiment" in this application means that a specific feature, structure or characteristic described in conjunction with the embodiment may be included in at least one embodiment of this application. The appearance of the phrase in various places in the specification does not necessarily refer to the same embodiment, nor is it an independent or alternative embodiment mutually exclusive with other embodiments.

In the description of this application, it should be noted that, unless otherwise clearly specified and limited, the terms "mounting", "connection", "jointing", "attachment" should be understood in a broad sense, for example, it may be a fixed connection, a detachable connection, or an integral connection; it may be a direct connection, or an indirect connection via an intermediate medium, or a communication between the interiors of two elements. For those of ordinary skill in the art, the specific meanings of the above terms in this application can be understood according to specific situations.

In the description of this application, it should be noted that, unless otherwise specified, "plurality" means two or more; the orientation or positional relationships indicated by the terms "upper", "lower", "left", "right", "inner", "outer" and the like are only for the convenience of describing this application and simplifying the description, rather than indicating or implying that the referred device or element must have a specific orientation, be constructed and operated in a specific orientation, and therefore cannot be understood as a limitation on this application. In addition, the terms "first", "second", "third", and the like are only used for descriptive purposes and cannot be understood as indicating or implying relative importance. "Vertical" is not strictly vertical, but within the allowable range of error. "Parallel" is not strictly parallel, but within the allowable range of error.

The term "or" in this application is merely a relational term describing associated objects, indicating that there can be two relationships, for example, A or B, which can mean: A exists alone, or B exists alone.

"Plurality" appearing in this application refers to two or more (including two).

In the embodiments of this application, the same reference signs denote the same components, and for the sake of brevity, detailed descriptions of the same components are omitted in different embodiments. It should be understood that the thickness, length, width, and other dimensions of various components in the embodiments of this application shown in the accompanying drawings, as well as the overall thickness, length, width, and other dimensions of the integrated apparatus are only exemplary illustrations and should not constitute any limitation on this application.

In this application, a battery cell may include but is not limited to a lithium-ion secondary battery, a lithium-ion primary battery, a lithium-sulfur battery, a sodium-lithium-ion battery, a sodium-ion battery, or a magnesium-ion battery. The battery cell may include but is not limited to a cylindrical shape, a flat shape, a rectangular shape, or other shapes. Battery cells are generally divided into cylindrical battery cells, prismatic battery cells, and pouch battery cells according to the packaging method.

The battery cell includes an electrode assembly and an electrolyte, and the electrode assembly is composed of a positive electrode sheet, a negative electrode sheet, and a separator. The battery cell mainly relies on metal ions moving between the positive electrode sheet and the negative electrode sheet to work, and the metal ions (for example, lithium ions) are repeatedly intercalated and de-intercalated between a positive electrode and a negative electrode. The separator is arranged between the positive electrode and the negative electrode, which can prevent short circuit between the positive electrode sheet and the negative electrode sheet while allowing active ions to pass through.

The positive electrode sheet includes a positive electrode current collector and a positive electrode active material layer, where the positive electrode active material layer is applied on a surface of the positive electrode current collector, the positive electrode current collector not coated with the positive electrode active material layer protrudes from the positive electrode current collector coated with the positive electrode active material layer, and the positive electrode current collector not coated with the positive electrode active material layer serves as a positive electrode tab.

Taking a lithium-ion battery as an example, the positive electrode active material may be lithium cobaltate, lithium iron phosphate, ternary lithium or lithium manganate, or the like. The positive electrode current collector may adopt a metal foil or a composite current collector. For example, as a metal foil, aluminum treated with silver plating on the surface, stainless steel treated with silver plating on the surface, stainless steel, copper, aluminum, nickel, carbon electrode, carbon, nickel or titanium, and the like may be used. The composite current collector may include a polymer material base layer and a metal layer. The composite current collector may be formed by forming a metal material (aluminum, aluminum alloy, nickel, nickel alloy, titanium, titanium alloy, silver and silver alloy, and the like) on a polymer material substrate (for example, a substrate of polypropylene, polyethylene terephthalate, polybutylene terephthalate, polystyrene, and polyethylene).

The negative electrode sheet includes a negative electrode current collector and a negative electrode active material layer, where the negative electrode active material layer is applied on a surface of the negative electrode current collector, the negative electrode current collector not coated with the negative electrode active material layer protrudes from the negative electrode current collector coated with the negative electrode active material layer, and the negative electrode current collector not coated with the negative electrode active material layer serves as a negative electrode tab.

The negative electrode current collector may adopt a metal foil or a composite current collector. For example, as a metal foil, aluminum treated with silver plating on the surface, stainless steel treated with silver plating on the surface, stainless steel, copper, aluminum, nickel, carbon electrode, carbon, nickel or titanium, and the like may be used. The negative electrode active material may be carbon, silicon, or the like.

In order to reduce the risk of melting of the tabs when passing a large current, the number of positive electrode tabs is plural and they are stacked together, and the number of negative electrode tabs is plural and they are stacked together. The material of the separator may be PP (polypropylene, polypropylene), PE (polyethylene, polyethylene), or the like. In addition, the electrode assembly may be a wound structure or a stacked structure.

The battery mentioned in the embodiments of this application refers to a single physical module including one or more battery cells to provide higher voltage and capacity. For example, the battery mentioned in this application may include a battery module, a battery pack, or the like. The battery generally includes a case for encapsulating one or more battery cells. The case can reduce the impact of liquid or other foreign matter on the charging or discharging of the battery cells.

In some embodiments, the battery may be a battery module, and when there are a plurality of battery cells, the plurality of battery cells are arranged and fixed to form a battery module.

In some embodiments, the battery may be a battery pack, the battery pack includes a case and battery cells, and the battery cells or battery modules are accommodated in the case.

In some embodiments, the plurality of battery cells can first be integrated into at least one battery module, and then the battery module(s) is/are installed in the case to form a battery pack. In this embodiment, auxiliary structural members such as beams may further be provided between the battery modules to improve the installation stability of the battery modules in the case.

In some embodiments, the case may be part of the chassis structure of a vehicle. For example, part of the case may become at least part of the floor of the vehicle, or part of the case may become at least part of the beams and longitudinal beams of the vehicle.

In some embodiments, the battery may be an energy storage device. The energy storage device includes an energy storage container, an energy storage cabinet, and the like.

The development of battery technology must consider a plurality of design factors at the same time, such as energy density, cycle life, discharge capacity, charge-discharge rate, and other performance parameters, and in addition, the reliability of the battery needs to be considered.

There is a risk of short circuit between the case of the battery and the battery cell group. Specifically, the case includes side walls and a bottom wall carrying the battery cell group, and the side walls are connected to the bottom wall via a first connection portion. The case is typically formed by stamping, and constrained by this forming method, the joint between the side walls and the bottom wall is a chamfered connection (that is, the first connection portion), and a minimum distance between the chamfer and the battery cell group is less than a minimum distance between the side walls and the bottom wall. For such a case, if the case is fabricated using the minimum distance between the side walls and the battery cell group as a safe electrical distance, the minimum distance between the chamfer and the battery cell group will be less than the minimum distance between the side walls and the bottom wall. This creates a risk of electrical breakdown between the chamfer and the battery cell group, resulting in short circuit between the case and the battery cell group, thereby impairing the reliability of the battery.

In view of this, to address the problem of the impaired reliability of the battery caused by the short circuit between the case and the battery cell group, an embodiment of this application provides a battery. The battery includes a first case and a battery cell group, where the first case includes a bottom wall and first side walls, the first side walls are connected to the bottom wall via a first connection portion, and a minimum distance between the first connection portion and the battery cell group is greater than or equal to a minimum distance between the first side walls and the battery cell group.

By setting the minimum distance between the first connection portion and the battery cell group to be greater than or equal to the minimum distance between the first side walls and the battery cell group, the distance between the first connection portion and the battery cell group is increased. In this way, when the minimum distance between the first side surface and the battery cell group is defined as a safe electrical distance, the minimum distance between the first connection portion and the battery cell group can be greater than or equal to the safe electrical distance. This mitigates the risk of electrical breakdown between the first connection portion and the battery cell group, lowers the risk of short circuit between the first case and the battery cell group, and enhances the reliability of the battery.

The technical solutions disclosed in the embodiments of this application are applicable to but not limited to batteries and electrical devices using batteries.

The electrical device may be a vehicle, a mobile phone, a portable device, a laptop computer, a ship, a spacecraft, an electric toy, an electric tool, and the like. The vehicle may be a fuel vehicle, a gas vehicle or a new energy vehicle, and the new energy vehicle may be a pure electric vehicle, a hybrid electric vehicle, an range-extended electric vehicle, and the like; the spacecraft includes an aircraft, a rocket, a space shuttle, a spaceship, and the like; the electric toy includes a stationary or mobile electric toy, such as a game console, an electric toy car, an electric toy ship, and an electric toy airplane; the electric tool includes a metal cutting electric tool, a grinding electric tool, an assembly electric tool and a railway electric tool, such as an electric drill, an electric angle grinder, an electric wrench, an electric screwdriver, an electric hammer, an impact electric drill, a concrete vibrator, and an electric planer.

For convenience of explanation, the following embodiments take the electrical device as a vehicle as an example.

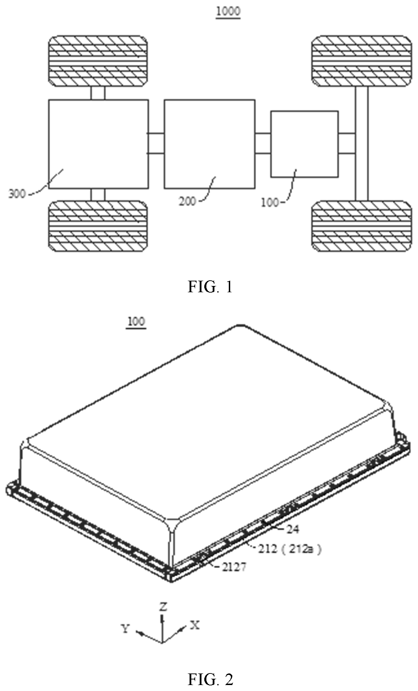

Referring to FIG. 1, FIG. 1 is a schematic structural diagram of a vehicle 1000 according to some embodiments of this application. A battery 100 is provided inside the vehicle 1000, and the battery 100 may be provided at the bottom, head, or tail of the vehicle 1000. The battery 100 may be used for power supply of the vehicle 1000, for example, the battery 100 may serve as an operating power source of the vehicle 1000.

The vehicle 1000 may further include a controller 300 and a motor 200, and the controller 300 is configured to control the battery 100 to supply power to the motor 200, for example, for working power requirements during starting, navigation and driving of the vehicle 1000.

In some embodiments of this application, the battery 100 can not only serve as an operating power source of the vehicle 1000, but also serve as a driving power source of the vehicle 1000, replacing or partially replacing fuel or natural gas to provide driving power for the vehicle 1000.

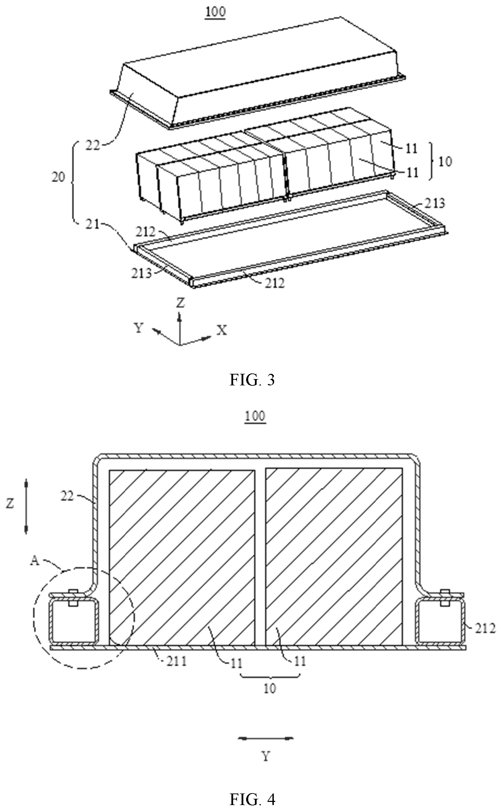

In some embodiments, referring to FIGs. 2 and 3, FIG. 2 is a schematic structural diagram of a battery 100 according to some embodiments of this application, and FIG. 3 is a schematic exploded view of a battery 100 according to some embodiments of this application. The battery 100 includes a battery cell group 10, and the battery cell group 10 includes a plurality of battery cells 11. The plurality of battery cells 11 may be connected in series or in parallel or in a mixed connection. The mixed connection means that the plurality of battery cells 11 are connected both in series and in parallel. For example, as shown in FIG. 3, the battery cell group 10 includes two columns of battery cells 11, and each column has a plurality of battery cells 11 arranged.

In some embodiments, the battery 100 may further include a busbar component (not shown in the figure), and the plurality of battery cells 11 may be electrically connected via the busbar component to realize series or parallel or mixed connection of the plurality of battery cells 11.

The busbar component may be a metal conductor, such as copper, iron, aluminum, steel, or aluminum alloy.

In some embodiments, the battery 100 may further include a case 20 for accommodating the battery cell group 10. The case 20 may include a first case 21 and a second case 22, where the first case 21 and the second case 22 cover each other to define an accommodation space for accommodating the battery cell group 10. Certainly, the connection between the first case 21 and the second case 22 may be sealed by a sealing element (not shown in the figure), and the sealing element may be a sealing ring, a sealant, or the like.

The first case 21 and the second case 22 may be in various shapes, such as a rectangular parallelepiped, a cube, or an octahedron. The first case 21 may be a hollow structure with one side open, the second case 22 may also be a hollow structure with one side open, and the open side of the second case 22 covers the open side of the first case 21, thereby forming the case 20 with an accommodation space.

The first case 21 is used for carrying the battery cell group 10. When the battery 100 is in use, the first case 21 may be located below, and in this case, the first case 21 is also called a lower case 20; and the second case 22 may be located above, and in this case, the second case 22 is also called an upper case 20. In some implementations, to improve the load of the first case 21 to carry the battery cell group 10, the material of the first case 21 may be metal, such as aluminum. In some embodiments, the material of the second case 22 may be plastic to decrease the mass of the second case 22, decrease the total mass of the case 20, and increase the proportion of the battery cell group 10 per unit mass, thereby increasing the energy density of the battery 100.

In some embodiments, the second case 22 may also be omitted, to be specific, the case 20 of the battery 100 has only the lower case 20, and the case 20 is an open structure. Such a structure can decrease the total mass and total volume of the case 20, thereby increasing the proportion of the battery cell group 10 per unit volume and per unit mass, and increasing the energy density of the battery 100.

When the material of the first case 21 is metal, to mitigate the risk of short circuit between the battery cell group 10 and the case 20, the periphery of the battery cell group 10 and the side walls of the first case 21 may be arranged with a gap, to be specific, the battery cell group 10 and the side walls of the first case 21 are insulated by air, so as to ensure a safe electrical distance between the battery cell group 10 and the side walls of the first case 21. To lower the risk of short circuit between the battery cell group 10 and the first case 21, an insulating member 24 may be disposed between the battery cell group 10 and the bottom wall 211 of the first case 21, and the material of the insulating member 24 includes but is not limited to silicone and rubber.

An embodiment of this application provides a battery 100, to alleviate the problem of low reliability of the battery 100 caused by short circuit between the case 20 of the battery 100 and the battery cell group 10. The specific structure of the battery 100 will be described in detail below in conjunction with the accompanying drawings.

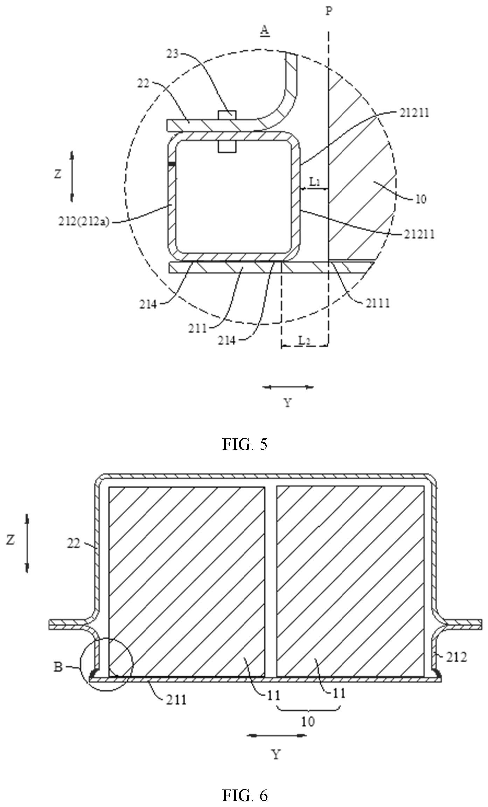

FIG. 4 is a cross-sectional view of a battery 100 according to some embodiments of this application; and FIG. 5 is an enlarged view of part A in FIG. 4.

Referring to FIGs. 2, 3, 4, and 5, in some embodiments, the battery 100 includes a battery cell group 10 and a first case 21. The first case 21 includes a bottom wall 211 and two first side walls 212 oppositely arranged along a first direction Y, where the battery cell group 10 is located between the two first side walls 212, the bottom wall 211 is used for carrying the battery cell group 10, and each first side wall 212 is connected to the bottom wall 211 via a first connection portion 214; and the first side wall 212 has a first side surface 21211 facing the battery cell group 10, along the first direction Y, a minimum distance between the first side surface 21211 and the battery cell group 10 is L₁, and a minimum distance between the first connection portion 214 and the battery cell group 10 is L₂, satisfying L₁ ≤ L₂.

The shape of the first case 21 is adapted to the shape of the battery cell group 10, and the first case 21 may be constructed as a rectangular parallelepiped, a pentagonal prism, a hexagonal prism, or the like. For example, as shown in FIGs. 3 and 4, the first case 21 is a rectangular parallelepiped.

The first side wall 212 refers to a wall portion of the first case 21 oppositely arranged with the battery cell group 10 in the first direction Y.

When the first case 21 is a rectangular parallelepiped, the first direction Y may be the length direction of the first case 21, or the first direction Y may be the width direction of the first case 21. If the first direction Y is the length direction of the first case 21, the first side wall 212 is a side wall extending along the width direction of the first case 21; if the first direction Y is the width direction of the first case 21, the first side wall 212 is a side wall extending along the length direction of the first case 21. For example, as shown in FIGs. 3 and 4, the first direction Y is the width direction of the first case 21, and in this case, the first side wall 212 is a side wall extending along the length direction of the first case 21.

It can be understood that the first side wall 212 may be a side wall in any direction of the first case 21.

The first side wall 212 is connected to the bottom wall 211 via the first connection portion 214, that is, the first connection portion 214 is formed between the first side wall 212 and the bottom wall 211.

The first side wall 212 and the bottom wall 211 may be fabricated separately and then connected together via the first connection portion 214, or the first side wall 212, the first connection portion 214, and the bottom wall 211 may alternatively be integrally formed. The form of the first connection portion 214 may be of various types, as long as it can satisfy the connection between the first side wall 212 and the bottom wall 211. When the first side wall 212 and the bottom wall 211 are fabricated separately, the structure of the first connection portion 214 may include but is not limited to a weld mark, an adhesive, and a bolt. When the first side wall 212, the first connection portion 214, and the bottom wall 211 are integrally formed, the first connection portion 214 may be a corner between the first side wall 212 and the bottom wall 211 (as shown in FIG. 6).

The first side wall 212 has a first side surface 21211 facing the battery cell group 10, correspondingly, the battery cell group 10 also has a surface facing the first side wall 212, and the position where the surface of the battery cell group 10 facing the first side wall 212 is located is defined as a reference line P. Along the first direction Y, the distance from the first side surface 21211 to the reference line P is measured as La, and the distance from the first side surface 21211 to the reference line P is measured as Lb.

The minimum distance between the first side surface 21211 and the battery cell group 10 is L₁, that is, the minimum value of La is L₁.

The minimum distance between the first connection portion 214 and the battery cell group 10 is L₂, that is, the minimum value of Lb is L₂.

For example, as shown in FIG. 5, from top to bottom, the distance between the first side surface 21211 and the battery cell group 10 is equal, La is a constant value, and in this case, L₁ is equal to La. In FIG. 5, the first connection portion 214 is on the side of the first side surface 21211 away from the battery cell group 10, so L₂ is greater than L₁.

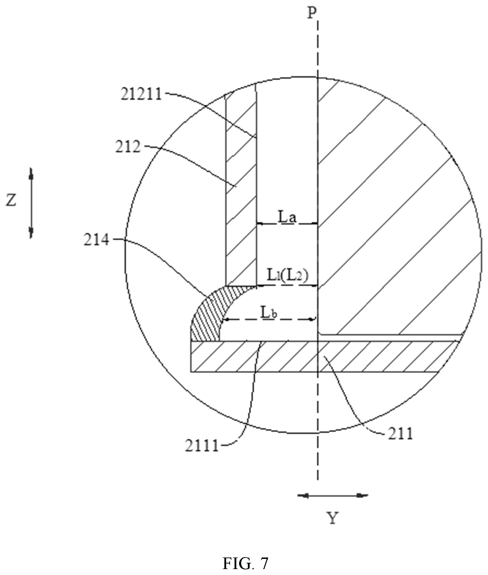

For example, referring to FIGs. 6 and 7, FIG. 6 is a cross-sectional view of a battery 100 according to other embodiments of this application; FIG. 7 is an enlarged view of part B in FIG. 6. As shown in FIG. 7, from top to bottom, the distance between the first side surface 21211 and the battery cell group 10 is equal, La is a constant value, and L₁ is equal to La. From top to bottom, the distance between the first connection portion 214 and the battery cell group 10 gradually increases, and Lb gradually increases. The minimum distance L₂ between the first connection portion 214 and the battery cell group 10 is equal to the minimum distance L₁ between the first side surface 21211 and the battery cell group 10.

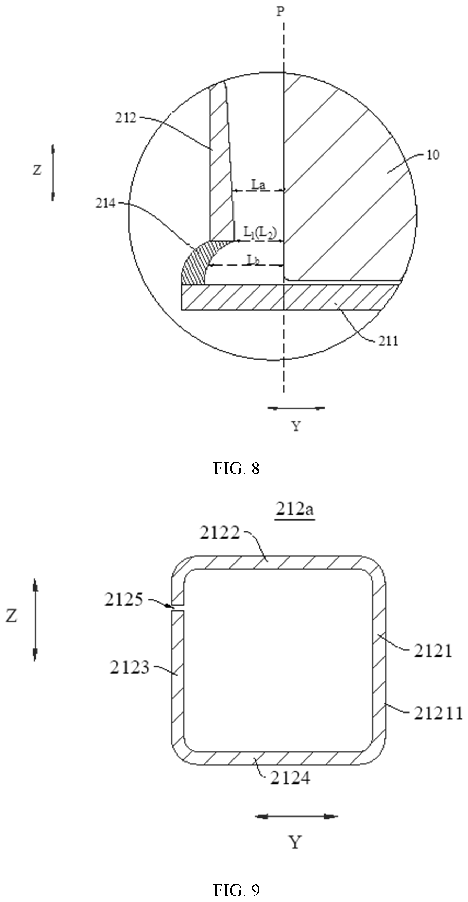

For example, referring to FIG. 8, FIG. 8 is a schematic structural diagram of some other embodiments of the first side wall 212 in FIG. 7. In FIG. 8, the first side surface 21211 is inclined relative to the battery cell group 10, from top to bottom, a distance between the first side surface 21211 and the battery cell group 10 gradually decreases, and La gradually decreases. From top to bottom, a distance between the first connection portion 214 and the battery cell group 10 gradually increases. The minimum distance L₂ between the first connection portion 214 and the battery cell group 10 is also equal to the minimum distance L₁ between the first side surface 21211 and the battery cell group 10.

It should be noted that different batteries 100 have different voltages, and the electrical breakdown distances varies with the voltage. Therefore, the electrical distance that ensures the reliability between the first side surface 21211 and the battery cell group 10 is not a fixed value.

In this embodiment, the minimum distance L₂ between the first connection portion 214 and the battery cell group 10 is greater than or equal to the minimum distance L₁ between the first side surface 21211 and the battery cell group 10, thus increasing the distance between the first connection portion 214 and the battery cell group 10, so as to make the first connection portion 214 away from the battery cell group 10. In this way, when the minimum distance between the first side surface 21211 and the battery cell group 10 is defined as a safe electrical distance, the minimum distance between the first connection portion 214 and the battery cell group 10 can be greater than or equal to the safe electrical distance. This mitigates the risk of electrical breakdown between the first connection portion 214 and the battery cell group 10, lowers the risk of short circuit between the first case 21 and the battery cell group 10, and enhances the reliability of the battery 100.

In some embodiments, 4 mm ≤ L₁ ≤ 50 mm.

For example, L₁ may be 4 mm, 6 mm, 7 mm, 9 mm, 11 mm, 13 mm, 15 mm, 18 mm, 20 mm, 23 mm, 27 mm, 30 mm, 35 mm, 39 mm, 42 mm, 45 mm, 47 mm, 50 mm, or the like. Since all values between 4 mm and 50 mm cannot be enumerated, several intermediate values are enumerated as examples this time. It can be understood that any value therebetween can serve as the minimum distance L₁ between the first side surface 21211 and the battery cell group 10.

It should be noted that the space inside the first case 21 includes two parts, one part is the space available for accommodating the battery cell group 10, and the other part is the space between the side walls of the first case 21 and the battery cell group 10, and this part of space is used for insulation between the battery cell group 10 and the side walls. When L₁ is larger, the insulation effect between the battery cell group 10 and the side walls is better; and when the size of the first case 21 is fixed, L₁ is smaller, the space available for accommodating the battery cell group 10 is larger, and the distance between the battery cell group 10 and the side walls is shorter.

In this embodiment, L₁ is greater than or equal to 4 mm so as to ensure a safe electrical distance between the first side surface 21211 and the battery cell group 10 and thus enhance the reliability of the battery 100. With the size of the first case 21 fixed, L₁ is less than or equal to 50 mm, which can reduce the distance between the battery cell group 10 and the first side surface 21211, so that the space accommodating the battery cell group 10 is larger, thereby accommodating a battery cell group 10 with a larger volume, increasing the proportion of the battery cell group 10 per unit volume, and improving the energy density of the battery 100. Therefore, 4 mm ≤ L₁ ≤ 50 mm can balance the reliability and energy density of the battery 100.

In some embodiments, 6 mm ≤ L₁ ≤ 40 mm.

For example, L₁ may be 6 mm, 7 mm, 9 mm, 11 mm, 13 mm, 15 mm, 16 mm, 18 mm, 20 mm, 23 mm, 25 mm, 27 mm, 30 mm, 32 mm, 35 mm, 37 mm, 39 mm, 40 mm, or the like. Since all values between 6 mm and 40 mm cannot be enumerated, several intermediate values are enumerated as examples this time. It can be understood that any value therebetween can serve as the minimum distance L₁ between the first side surface 21211 and the battery cell group 10.

In this embodiment, L₁ is greater than or equal to 6 mm, which can further enhance the reliability of the electrical distance between the first side surface 21211 and the battery cell group 10, thereby boosting the reliability of the battery 100. With the size of the first case 21 fixed, L₁ is less than or equal to 40 mm, which can further reduce the distance between the battery cell group 10 and the first side surface 21211, increase the space accommodating the battery cell group 10, increase the proportion of the battery cell group 10 per unit volume, and increase the energy density of the battery 100. Therefore, 6 mm ≤ L₁ ≤ 40 mm can further balance the reliability and energy density of the battery 100.

Referring to FIGs. 5 and 7, in some embodiments, the bottom wall 211 has a first surface 2111 facing the battery cell 11, and the first side surface 21211 is perpendicular to the first surface 2111.

For example, in FIGs. 5 and 7, the first side surface 21211 is perpendicular to the first surface 2111, from top to bottom, the distance between the first side surface 21211 and the battery cell group 10 is equal everywhere, and the distance between the first side surface 21211 and the battery cell group 10 measured at any position is the minimum distance L₁ between the first side surface 21211 and the battery cell group 10.

In this embodiment, the first side surface 21211 is perpendicular to the first surface 2111, which helps improve the consistency of the distance between the first side surface 21211 and the battery cell group 10.

In some embodiments, referring to FIGs. 4 and 5, the first side wall 212 and the bottom wall 211 are formed separately. That is, the first side wall 212 and the bottom wall 211 may be fabricated separately.

After the first side wall 212 and the bottom wall 211 are formed separately, they may be fixedly connected by bonding, welding, bolts, or the like. If the first side wall 212 and the bottom wall 211 are bonded by an adhesive, the adhesive serves as the first connection portion 214; if the first side wall 212 and the bottom wall 211 are welded, the weld mark between the first side wall 212 and the bottom wall 211 serves as the first connection portion 214; and if the first side wall 212 and the bottom wall 211 are connected by bolts, the bolts serve as the first connection portion 214.

Compared with the technical solution in which the first side wall 212 and the bottom wall 211 are integrally formed, after the first side wall 212 and the bottom wall 211 are formed separately, the first side wall 212 and the bottom wall 211 are jointed via the first connection portion 214. In this way, the position of the first connection portion 214 is not constrained by the forming process of the first case 21, thereby facilitating the arrangement of the first connection portion 214 at a position away from the battery cell group 10. This mitigates the risk of short circuit between the first connection portion 214 and the battery cell group 10, and is conducive to improving the reliability of the battery 100 while lowering the manufacturing difficulty of the first case 21.

In some embodiments, the first side wall 212 and the bottom wall 211 are welded to form a first welding portion, and the first connection portion 214 is the first welding portion.

It can be understood that the first side wall 212 and the bottom wall 211 are welded to form a first welding portion, and the first welding portion is the weld mark formed by welding between the first side wall 212 and the bottom wall 211.

The first side wall 212 and the bottom wall 211 are joined by welding. This welding process enhances the joint strength between the first side wall 212 and the bottom wall 211, thereby boosting the overall structural strength of the first case 21.

Referring to FIG. 9, FIG. 9 is a schematic structural diagram of a first beam 212a according to some embodiments of this application. In some embodiments, the first side wall 212 is a first beam 212a formed by roll forming of a plate member.

The first beam 212a is a load-bearing member, and the first beam 212a can improve the load capacity and bearing capacity of the first case 21.

The first beam 212a may be constructed as a long strip, and the shape of the cross section of the first beam 212a includes but is not limited to a rectangle, a trapezoid, and a hexagon.

The first side wall 212 is a first beam 212a formed by roll forming of a plate member. This roll forming process yields a first side wall 212 with enhanced structural strength, further enhancing the overall structural strength of the first case 21 and boosting the reliability of the battery 100. It also facilitates the fabrication and forming the first side wall 212, thereby lowering the manufacturing difficulty of the first side wall 212.

Referring to FIGs. 5 and 9, in some embodiments, the first beam 212a includes a first wall portion 2121, a second wall portion 2122, a third wall portion 2123, and a fourth wall portion 2124 connected end to end in sequence, where the first wall portion 2121, the second wall portion 2122, the third wall portion 2123 and the fourth wall portion 2124 enclose to form a cavity; and the first wall portion 2121 and the third wall are oppositely arranged along the first direction Y, the second wall portion 2122 and the fourth wall portion 2124 are oppositely arranged along a second direction Z, one side of the first wall portion 2121 facing the battery cell group 10 is the first side surface 21211, and the second direction Z is perpendicular to the first direction Y.

For example, as shown in FIGs. 9 and 5, the first wall portion 2121, the second wall portion 2122, the third wall portion 2123, and the fourth wall portion 2124 enclose to form a square shape. The first wall portion is close to the battery cell group 10, the fourth wall portion is close to the bottom wall 211, and the fourth wall portion is connected to the bottom wall 211 via the first connection portion 214.

In this embodiment, the first wall portion 2121, the second wall portion 2122, the third wall portion 2123, and the fourth wall portion 2124 are connected end to end in sequence to form the first beam 212a. The first wall portion 2121, the second wall portion 2122, the third wall portion 2123, and the fourth wall portion 2124 enclose to form a cavity, where the cavity reduces the mass of the first beam 212a, lowers the proportion of the first case 21 per unit mass, increases the proportion of the battery cell group 10 per unit mass, and can enhance the energy density of the battery 100.

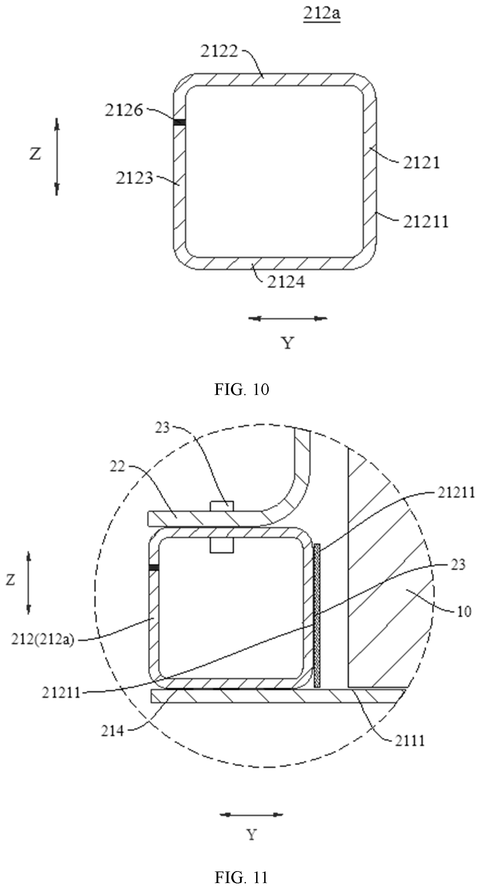

Referring to FIGs. 9 and 10, FIG. 10 is a schematic structural diagram of a first beam 212a according to some other embodiments of this application. In some embodiments, a leading end and a trailing end of the plate member are connected.

It can be understood that along the roll forming direction, the plate member has a leading end and a trailing end, and after roll forming, a joint seam 2125 is formed between the leading end and the trailing end of the first beam 212a, and the joint seam 2125 may be filled with an adhesive, a solder, or the like to realize the connection between the leading end and the trailing end of the plate member.

The leading end and the trailing end of the plate member are joined together, which can enhance the structural strength of the first beam 212a, and boost the structural strength of the first case 21, thereby improving the reliability of the battery 100.

Referring to FIG. 10, in some embodiments, a leading end and a trailing end of the plate member are welded to form a second welding portion 2126.

It can be understood that along the roll forming direction, the plate member has a leading end and a trailing end, and after roll forming, a joint seam 2125 is formed between the leading end and the trailing end of the first beam 212a, and a weld mark is formed at the joint seam 2125, and the weld mark serves as the second welding portion 2126. The leading end and the trailing end of the plate member may be melted to fill the joint seam 2125 to form the second welding portion 2126 so as to realize welding of the leading end and the trailing end of the plate member, or the joint seam 2125 may be filled with a solder to form the second welding portion 2126 so as to realize welding of the leading end and the trailing end of the plate member.

When the first beam 212a includes the first wall portion 2121, the second wall portion 2122, the third wall portion 2123, and the fourth wall portion 2124 connected end to end in sequence, the joint seam 2125 of the leading end and the trailing end of the plate member may be at any wall portion of the first beam 212a. For example, as shown in FIGs. 9 and 10, the joint seam 2125 formed by the leading end and the trailing end of the plate member is located at the third wall portion 2123, and correspondingly, the second welding portion 2126 is also disposed at the third wall portion 2123.

In this embodiment, jointing the leading end and the trailing end of the plate member by welding is conducive to enhancing the structural strength of the first beam 212a and boosting the overall structural strength of the first case 21.

In some embodiments, the material of the first beam 212a is steel.

In some embodiments, the material of the bottom wall 211 is aluminum.

Referring to FIG. 2, in some embodiments, the first beam 212a is provided with a mounting portion 2127.

The mounting portion 2127 is a structure for installing or fixing the battery 100 to a desired position, for example, the mounting portion 2127 is used for connecting with the sheet metal of the vehicle body. The mounting portion 2127 facilitates installing or fixing the battery 100 to a desired position.

The structural form of the mounting portion 2127 may be various, and the mounting portion 2127 includes but is not limited to a mounting hole, a sleeve, a corner piece, and a handle. For example, as shown in FIG. 2, the mounting portion 2127 is a handle.

In some embodiments, when the first beam 212a includes the first wall portion 2121, the second wall portion 2122, the third wall portion 2123, and the fourth wall portion 2124 connected end to end in sequence, the mounting portion 2127 is provided on the second wall portion 2122.

Referring to FIG. 11, FIG. 11 is a schematic structural diagram of an insulating member 24 provided on the first side surface 21211 according to some embodiments of this application. In some embodiments, the battery 100 further includes an insulating member 24, where the insulating member 24 is disposed on the first side surface 21211 to further mitigate the risk of short circuit between the battery cell group 10 and the first side wall 212, thereby enhancing the reliability of the battery 100.

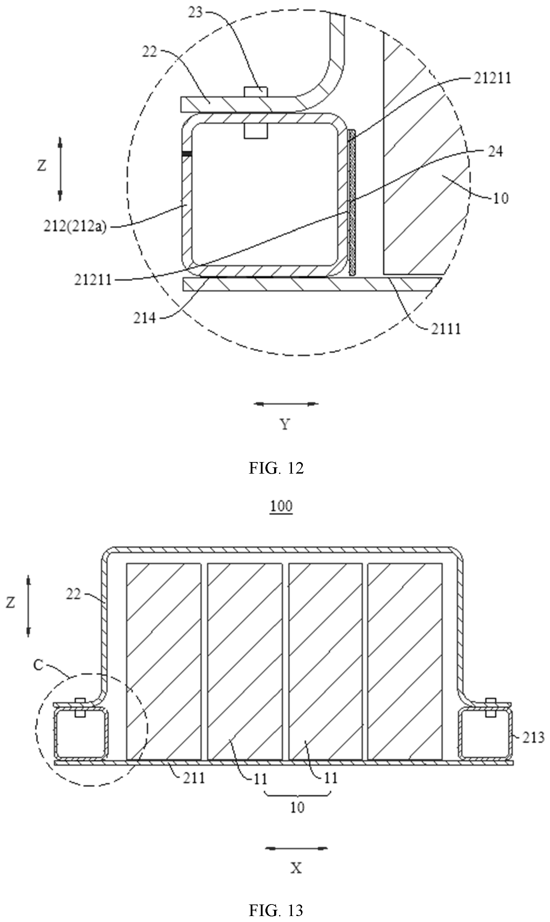

Referring to FIG. 12, FIG. 12 is a schematic structural diagram of other embodiments of the first beam 212a and the bottom wall 211 in FIG. 5. In some embodiments, a recessed portion 21241 is disposed on one side of the first beam 212a facing the bottom wall 211, a protruding portion 2112 is disposed on one side of the bottom wall 211 facing the first beam 212a, and the recessed portion 21241 and the protruding portion 2112 abut against each other along the first direction Y. The protruding portion 2112 is configured to cooperate with the recessed portion 21241 to restrict the first beam 212a from moving in a direction toward the battery cell group 10.

In some embodiments, there are a plurality of mounting portions 2127, and the plurality of mounting portions 2127 are arranged at intervals along the second direction Z.

Referring to FIGs. 2, 3 and 4, in some embodiments, the battery 100 further includes a second case 22, where the second case 22 and the first case 21 jointly define an accommodation space for accommodating the battery cell group 10, and the second case 22 is connected to the first beam 212a.

Optionally, the second case 22 and the first beam 212a are detachably connected via a locking member 23, and the locking member 23 includes but is not limited to a bolt and a screw. The second case 22 and the first beam 212a may alternatively be detachably connected via a snap.

The shape of the second case 22 may be various, and the shape of the second case 22 is adapted to the shape of the first case 21 as long as it can accommodate the battery cell group 10. For example, as shown in FIG. 3, both the first case 21 and the second case 22 are constructed as rectangular parallelepipeds.

In this embodiment, the second case 22 and the first case 21 jointly define an accommodation space for accommodating the battery cell group 10, the second case 22 and the first case 21 separate or isolate the accommodation space from the external environment, and the second case 22 and the first case 21 create a relatively stable internal environment for the battery cell group 10. This mitigates the impact of substances in the external environment on the battery cell group 10, and thus enhances the reliability of the battery 100.

In some implementations, the material of the second case 22 is an insulating material to mitigate the risk of short circuit between the battery cell group 10 and the second case 22. Optionally, the material of the second case 22 is plastic.

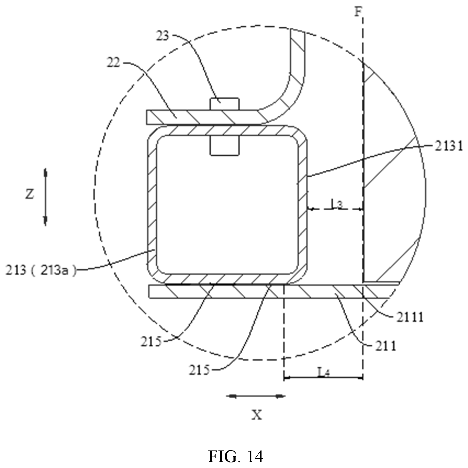

FIG. 13 is a cross-sectional view of a battery 100 along another perspective according to some other embodiments of this application, and FIG. 14 is an enlarged view of part C in FIG. 13.

Referring to FIGs. 3, 13 and 14, in some embodiments, the first case 21 further includes two second side walls 213 oppositely arranged along a third direction X, where the battery cell group 10 is located between the two second side walls 213, and each second side wall 213 is connected to the bottom wall 211 via a second connection portion 215. The second side wall 213 has a second side surface 2131 facing the battery cell group 10, along the first direction Y, a minimum distance between the second side surface 2131 and the battery cell group 10 is L₃, a minimum distance between the second connection portion 215 and the battery cell group 10 is L₄, satisfying L₃ ≤ L₄, and the third direction X is perpendicular to the first direction Y.

The second side wall 213 refers to a wall portion of the first case 21 oppositely arranged with the battery cell group 10 in the third direction X.

When the first case 21 is a rectangular parallelepiped, the third direction X may be the length direction of the first case 21, or the third direction X may be the width direction of the first case 21. For example, the first direction Y is the width direction of the first case 21, the third direction X is the length direction of the second case 22, the first side wall 212 is a side wall extending along the length direction of the first case 21, and the second side wall 213 is a side wall extending along the width direction of the second case 22.

The second side wall 213 is connected to the bottom wall 211 via the second connection portion 215, that is, the second connection portion 215 is formed between the second side wall 213 and the bottom wall 211.

The second side wall 213 and the bottom wall 211 may be fabricated separately and then connected together via the second connection portion 215, or the second side wall 213, the second connection portion 215, and the bottom wall 211 may alternatively be integrally formed. The form of the second connection portion 215 may be of various types, as long as it can satisfy the connection between the second side wall 213 and the bottom wall 211. When the second side wall 213 and the bottom wall 211 are fabricated separately, the structure of the second connection portion 215 may include but is not limited to a weld mark, an adhesive, and a bolt. When the second side wall 213, the second connection portion 215, and the bottom wall 211 are integrally formed, the second connection portion 215 may be a corner between the second side wall 213 and the bottom wall 211 (not shown in the figure).

The second side wall 213 has a first side surface 21211 facing the battery cell group 10, correspondingly, the battery cell group 10 also has a surface facing the second side wall 213, and the position where the surface of the battery cell group 10 facing the second side wall 213 is located is defined as a reference line F. The minimum distance from the first side surface 21211 to the reference line F is L₃, and the distance from the first side surface 21211 to the reference line F is L₄.

In this embodiment, the minimum distance between the second connection portion 215 and the battery cell group 10 is greater than or equal to the minimum distance between the second side surface 2131 and the battery cell group 10, thus increasing the distance between the second connection portion 215 and the battery cell group 10. In this way, when the minimum distance between the second side surface 2131 and the battery cell group 10 is defined as a safe electrical distance, the minimum distance between the second connection portion 215 and the battery cell group 10 can be greater than or equal to the safe electrical distance. This mitigates the risk of electrical breakdown between the second connection portion 215 and the battery cell group 10, further lowers the risk of short circuit between the first case 21 and the battery cell group 10, and thus enhances the reliability of the battery 100.

In some embodiments, the second side wall 213 is a second beam 213a formed by roll forming of a plate member.

The second beam 213a is a load-bearing member, and the second beam 213a can improve the load capacity and bearing capacity of the first case 21.

The second beam 213a may be constructed as a long strip, and the shape of the cross section of the second beam 213a includes but is not limited to a rectangle, a trapezoid, and a hexagon.

In this embodiment, the second side wall 213 is a second beam 213a formed by roll forming of a plate member. This roll forming process yields a second side wall 213 with enhanced structural strength, further enhancing the overall structural strength of the first case 21 and boosting the reliability of the battery 100. It also facilitates the fabrication and forming the second side wall 213, thereby lowering the manufacturing difficulty of the second side wall 213.

In some embodiments, the second beam 213a is connected to the second case 22. Optionally, the second beam 213a and the second case 22 are detachably connected via a locking member 23.

In some embodiments, the second beam 213a may have the same structure as the first beam 212a, and the second connection portion 215 may have the same structure as the first connection portion 214. For the sake of brevity of description, this application will not repeat the specific structures of the second beam 213a and the second connection portion 215.

An embodiment of this application further provides an electrical device, where the electrical device includes the battery 100 provided in any of the above embodiments, and the battery 100 is configured to supply power to the electrical device.

An embodiment of this application further provides a battery 100, where the battery 100 includes a first case 21, a second case 22, and a battery cell group 10. The second case 22 and the first case 21 jointly define an accommodation space for accommodating the battery cell group 10.

The first case 21 includes a bottom wall 211, two first side walls 212 oppositely arranged along a first direction Y, and two second side walls 213 oppositely arranged along a third direction X, where the battery cell group 10 is located between the two first side walls 212, the battery cell group 10 is located between the two second side walls 213, the bottom wall 211 is used for carrying the battery cell group 10, each first side wall 212 is connected to the bottom wall 211 via a first connection portion 214, and each second side wall 213 is connected to the bottom wall 211 via a second connection portion 215. The first side wall 212 has a first side surface 21211 facing the battery cell group 10, along the first direction Y, a minimum distance between the first side surface 21211 and the battery cell group 10 is L₁, and a minimum distance between the first connection portion 214 and the battery cell group 10 is L₂, satisfying L₁ ≤ L₂. The second side wall 213 has a second side surface 2131 facing the battery cell group 10, along the first direction Y, a minimum distance between the second side surface 2131 and the battery cell group 10 is L₃, and a minimum distance between the second connection portion 215 and the battery cell group 10 is L₄, satisfying L₃ ≤ L₄. The bottom wall 211 has a first surface 2111 facing the battery cell 11, the first side surface 21211 is perpendicular to the first surface 2111, and the second side surface 2131 is perpendicular to the first surface 2111. The first side wall 212 is a first beam 212a formed by roll forming of a plate member, and the second side wall 213 is a second beam 213a formed by roll forming of a plate member. The first beam 212a and the bottom wall 211 are welded to form a first welding portion, the second beam 213a and the bottom wall 211 are welded to form a second welding portion 2126, the first welding portion is the first connection portion 214, and the second welding portion 2126 is the second connection portion 215. The first beam 212a includes a first wall portion 2121, a second wall portion 2122, a third wall portion 2123, and a fourth wall portion 2124 connected end to end in sequence, where the first wall portion 2121, the second wall portion 2122, the third wall portion 2123, and the fourth wall portion 2124 enclose to form a cavity; and the first wall portion 2121 and the third wall are oppositely arranged along the first direction Y, the second wall portion 2122, and the fourth wall portion 2124 are oppositely arranged along a second direction Z, one side of the first wall portion 2121 facing the battery cell group 10 is the first side surface 21211, and the second direction Z is perpendicular to the first direction Y. A leading end and a trailing end of the plate member are connected and welded to form a second welding portion 2126, and the first beam 212a is provided with a mounting portion 2127. The second beam 213a has the same structure as the first beam 212a. The third direction X, the first direction Y and the second direction Z are perpendicular to each other pairwise.

It should be noted that, in the case of no conflict, the embodiments and features in the embodiments in this application can be combined with each other.

The above embodiments are only used to illustrate the technical solutions of this application and are not used to limit this application. For those skilled in the art, this application can have various modifications and changes. Any modification, equivalent replacement, improvement, and the like made within the spirit and principle of this application shall be included in the protection scope of this application.

## Claims

1. A battery, **characterized by** comprising:
a battery cell group; and
a first case, comprising a bottom wall and two first side walls oppositely arranged along a first direction, wherein the battery cell group is located between the two first side walls, the bottom wall is used for carrying the battery cell group, and each of the first side walls is connected to the bottom wall via a first connection portion; and
the first side wall has a first side surface facing the battery cell group, along the first direction, a minimum distance between the first side surface and the battery cell group is L₁, and a minimum distance between the first connection portion and the battery cell group is L₂, satisfying L₁ ≤ L₂.

2. The battery according to claim 1, **characterized in that** 4 mm ≤ L₁ ≤ 50 mm.

3. The battery according to claim 2, **characterized in that** 6 mm ≤ L₁ ≤ 40 mm.

4. The battery according to any one of claims 1 to 3, **characterized in that** the bottom wall has a first surface facing the battery cell, and the first side surface is perpendicular to the first surface.

5. The battery according to any one of claims 1 to 4, **characterized in that** the first side wall and the bottom wall are formed separately.

6. The battery according to claim 5, **characterized in that** the first side wall and the bottom wall are welded to form a first welding portion, and the first connection portion is the first welding portion.

7. The battery according to claim 5 or 6, **characterized in that** the first side wall is a first beam formed by roll forming of a plate member.

8. The battery according to claim 7, **characterized in that** the first beam comprises a first wall portion, a second wall portion, a third wall portion, and a fourth wall portion connected end to end in sequence, wherein the first wall portion, the second wall portion, the third wall portion and the fourth wall portion enclose to form a cavity; and
the first wall portion and the third wall are oppositely arranged along the first direction, the second wall portion and the fourth wall portion are oppositely arranged along a second direction, one side of the first wall portion facing the battery cell group is the first side surface, and the second direction is perpendicular to the first direction.

9. The battery according to claim 7 or 8, **characterized in that** a leading end and a trailing end of the plate member are connected.

10. The battery according to any one of claims 7 to 9, **characterized in that** a leading end and a trailing end of the plate member are welded to form a second welding portion.

11. The battery according to any one of claims 7 to 10, **characterized in that** the first beam is provided with a mounting portion.

12. The battery according to any one of claims 7 to 11, **characterized in that** the battery further comprises:
a second case, jointly defining with the first case an accommodation space for accommodating the battery cell group, wherein the second case is connected to the first beam.

13. The battery according to any one of claims 1 to 12, **characterized in that** the first case further comprises two second side walls oppositely arranged along a third direction, wherein the battery cell group is located between the two second side walls, and each of the second side walls is connected to the bottom wall via a second connection portion; and
the second side wall has a second side surface facing the battery cell group, along the first direction, a minimum distance between the second side surface and the battery cell group is L₃, a minimum distance between the second connection portion and the battery cell group is L₄, satisfying L₃ ≤ L_{4,} and the third direction is perpendicular to the first direction.

14. The battery according to claim 13, **characterized in that** the second side wall is a second beam formed by roll forming of a plate member.

15. An electrical device, **characterized by** comprising the battery according to any one of claims 1 to 14, wherein the battery is configured to supply power to the electrical device.
